# EUROPÄISCHE PATENTSCHRIFT

(11) **EP 2 064 425 B1**
(45) Veröffentlichungstag und Bekanntmachung des Hinweises auf die Patenterteilung: **24.10.2018**
(21) Anmeldenummer: 07800166.6
(22) Anmeldetag: 04.09.2007
(51) Int. Cl.: F16H 55/08, F16H 55/30, F02B 67/06, B22F 5/08, F16H 35/00, F16H 55/17

(54) **VERFAHREN ZUR HERSTELLUNG VON UNRUNDEN ZAHNRIEMENRÄDERN ODER KETTENRÄDERN**
METHOD FOR PRODUCING NON-CIRCULAR TOOTHED BELT PULLEYS OR SPROCKETS
PROCÉDÉ DE FABRICATION DE PIGNONS NON CIRCULAIRES POUR COURROIES CRANTÉES OU CHAÎNES

(30) Priorität: 12.09.2006 AT 15132006
(43) Veröffentlichungstag der Anmeldung: 03.06.2009
(73) Patentinhaber: Miba Sinter Austria GmbH, 4663 Laakirchen (AT)
(72) Erfinder: SIESSL, Wolfgang, A-4801 Traunkirchen (AT); SCHMID, Herbert, A-4655 Vorchdorf (AT); DICKINGER, Karl, A-4655 Vorchdorf (AT)
(74) Vertreter: Ofner, Clemens
(86) Internationale Anmeldenummer: PCT/AT2007/000421
(87) Internationale Veröffentlichungsnummer: WO 2008/031123

(56) Entgegenhaltungen:
- WO-A-03/046413
- DE-A1- 2 446 172
- DE-A1-102005 008 676
- DE-A1-102005 027 103
- GB-A- 2 360 825
- JP-A- 2006 206 975
- JP-A- 2007 217 740
- US-A- 4 504 202

## Beschreibung

Die Erfindung betrifft ein Verfahren zur Herstellung eines Pressformprofils einer Pressform für ein unrundes gesintertes Kettenrad oder Zahnriemenrad mit den Maßnahmen des unabhängigen Patentanspruchs 1 sowie ein Verfahren zur Herstellung eines unrunden Kettenrades oder eines unrunden Zahnriemenrades aus Metallpulver.

In der Antriebstechnik gibt es Anwendungsfälle, bei denen unrunde Kettenräder oder Zahnriemenräder zur Erzielung bestimmter Effekte eingesetzt werden. Eine derartige Anwendung ist beispielsweise aus der WO 03/046413 A1 bekannt, die einen Synchronantrieb, umfassend ein endlos umlaufendes Zugmittel und zumindest zwei mit dem Zugmittel im Eingriff befindliche Rotorelemente offenbart. Dabei wird ein am zweiten Rotorelement angreifendes, schwankendes Lastmoment weitgehend kompensiert, in dem durch eine unrunde Ausführung des ersten Rotorelements ein gegenphasiges Antriebsmoment etwa gleicher Größe über das Zugmittel auf das zweite Rotorelement übertragen wird. Eine derartige Anordnung kann beispielsweise dazu verwendet werden, bei einem Nockenwellenantrieb Torsionsschwingungen der angetriebenen Nockenwelle als auch Schwingungen des Zugmittels zu reduzieren.

Während für runde Zahnriemenräder oder Kettenräder bei größeren Stückzahlen bereits häufig eine pulvermetallurgische Herstellung durch Sintern angewendet wird, ist die Anwendung von Sinterverfahren für unrunde Kettenräder oder Zahnriemenräder, bisher noch nicht verbreitet, da durch die Unrundheit des Fertigteils die Auslegung der Werkzeuge zur Herstellung eines Kettenrads oder eines Zahnriemenrades im Sinterverfahren mit den herkömmlichen Methoden nicht zufrieden stellend gelöst ist. Zur maßgenauen Herstellung von Sinterteilen, die keiner spanabhebenden Nachbearbeitung bedürfen, werden diese häufig durch Kalibrieren nachbearbeitet, wobei das Presswerkzeug zum Herstellen des Presslings aus Metallpulver und das Kalibrierwerkzeug zum Kalibrieren des Sinterteils aufeinander abgestimmt sein müssen, was zusätzliche Anforderungen bezüglich der Auslegung eines Presswerkzeuges stellt. Insbesondere die Auslegung der Pressform, bzw. dessen Querschnittsprofils hat großen Einfluss auf das Ergebnis des Produktionsprozesses von gesinterten Werkstücken.

Die DE 10 2005 008 676 A1 beschreibt ein Zahnrad für einen Zahnkettentrieb, insbesondere einen Kettentrieb einer Verbrennungskraftmaschine, mit einer Außenverzahnung, die eine Mehrzahl von Zähnen und Zahnlücken zwischen den Zähnen aufweist, wobei sich der Abstand zwischen einer Drehachse und einem Teilkreis des Zahnrades entlang seines Umfangs verändert.

Aus der JP 2006-206975 A ist ein pulvermetallurgisches Verfahren zur Herstellung eines gebogenen Getriebeelementes mit einer Mehrzahl an Zahngruppen bekannt, bei dem die Nachbearbeitung nach dem Sintern vermieden werden kann.

Aufgabe der Erfindung ist es daher, ein Verfahren zur Herstellung eines Pressformprofils einer Pressform bereitzustellen, das die Herstellung von unrunden gesinterten Kettenrädern oder Zahnriemenrädern mit einer hohen Fertigmaßgenauigkeit ermöglicht.

In der weiteren Beschreibung der Erfindung wird ausschließlich die Bezeichnung Zahnriemenrad verwendet, die Ausführungen beziehen sich jedoch sinngemäß jeweils auch auf Kettenräder.

Diese Aufgabe der Erfindung wird durch ein Verfahren mit den Maßnahmen des Patentanspruchs 1 gelöst. Gegenüber dem Stand der Technik, bei dem das Pressformprofil durch eine einfache Skalierung in Form einer zentrischen Streckung des Sollprofils des Zahnriemenrades festgelegt wird, wird durch die erfindungsgemäße zusätzliche Korrekturverschiebung das Pressformprofil besser an die bei einem Sintervorgang tatsächlich auftretenden Maßänderungen angepasst. Das Verhalten des mit der Pressform hergestellten Presslings beim Sintervorgang kann je nach Zusammensetzung des Metallpulvers, insbesondere abhängig vom Kupferanteil des Metallpulvers, ein Schwinden oder ein Wachsen während des Sintervorgangs umfassen.

Um nach dem Sintervorgang die Sollabmessungen bzw. das Sollprofil des Zahnriemenrades zu erhalten, wird eine der Maßänderung beim Sintervorgang entgegen wirkende Vergrößerung bzw. Verkleinerung des Pressformprofils gegenüber dem Sollprofil mit Hilfe der Skalierung vorgenommen. Da jedoch die Maß- und Formänderungen des Sinterteils während des Sintervorgangs insbesondere durch die Unrundheit nicht mit einer zentrischen Streckung übereinstimmen, ist durch die zusätzliche Korrekturverschiebung des Pressformprofils eine bessere Anpassung an das Sollprofil des Zahnriemenrades möglich.

Wird das gesinterte Zahnriemenrad einer Nachbearbeitung durch eine Kalibrierung unterzogen, ist es erforderlich, dass das Zahnriemenrad axial in ein Kalibrierwerkzeug eingeführt werden kann. Ein derartiges Kalibrierwerkzeug weist zur Kalibrierung eines Außenumfangs einen Innendurchmesser auf, der um ein geringes Maß kleiner ist, als ein entsprechender Außendurchmesser am zu kalibrierenden Zahnriemenrad. Insbesondere entspricht dieses Maß etwa dem Anteil der elastischen Verformung des Zahnriemenrades beim Entformen aus dem Kalibrierwerkzeug. Beim eigentlichen Kalibriervorgang wird das mit Spiel in das Kalibrierwerkzeug eingebrachte Zahnriemenrad axial gepresst, wodurch dieses unter radialer Querschnittszunahme bei gleichzeitiger axialer Längenabnahme an die Wandfläche des Kalibrierwerkzeugs gepresst wird. Beim anschließenden Entformen aus dem Kalibrierwerkzeug nimmt der Außendurchmesser des Zahnriemenrades durch die Rückbildung der elastischen Verformung wieder geringfügig zu, weshalb auch der Innendurchmesser des Kalibrierwerkzeugs geringfügig kleiner gewählt wird, als die Sollabmessung des Zahnriemenrades.

Bei Innendurchmessern des Zahnriemenrades verhält es sich dementsprechend umgekehrt, d.h. der Außendurchmesser eines mit einem Innendurchmesser des Zahnriemenrades zusammenwirkenden Kalibrierwerkzeugs ist geringfügig größer, als eine Sollabmessung an einem Innenumfang des Zahnriemenrades.

Bei der herkömmlichen Auslegung eines Pressformprofils durch eine Skalierung in Form einer einfachen zentrischen Streckung des Sollprofils wären die durch den Sintervorgang entstehenden Maßänderungen am Sinterteil, insbesondere an Zahnflanken des Zahnriemenrades, größer, als die durch den Skaliervorgang bewirkte Verschiebung des Sollprofils, wodurch sich zwischen dem gesinterten Zahnriemenrad und dem Kalibrierwerkzeug im Bereich der Zahnflanken eine Presspassung ergeben würde, die sowohl für das Kalibrierwerkzeug als auch den Sinterteil durch die hohen auftretenden Reibungskräfte beim axialen Einführen eine enorme Belastung und eine Beeinträchtigung der Qualität bewirken würde.

Wenn die Korrekturverschiebung bei einem Außenumfang des Zahnriemenrades in Richtung kleinerer Außenabmessungen erfolgt und/oder bei einem Innenumfang des Zahnriemenrades in Richtung größerer Innenabmessungen erfolgt, ist sichergestellt, dass die Abmessungen des gesinterten Zahnriemenrades ein Einführen in das Kalibrierwerkzeug mit ausreichendem Spiel zulassen.

Die Korrekturverschiebung kann dabei über den gesamten Umfang des Pressformprofils, d.h. an einem Außenumfang und/oder einem Innenumfang des Pressformprofils um einen konstanten Betrag erfolgen, was eine konstruktiv einfache Lösung der Korrekturverschiebung darstellt.

Es ist jedoch auch möglich, dass die Korrekturverschiebung über den Umfang des Pressformprofils veränderlich ist, da dadurch die Anpassung des Presswerkzeugs an die spezielle Geometrie eines konkreten Zahnriemenrades flexibel anpassbar ist. So kann z.B. das Maß der Korrekturverschiebung an einem bestimmten Punkt des Außenumfangs vom Abstand des Punktes von der Drehachse des Zahnriemenrades abhängig gemacht werden. Durch die Anpassung der Korrekturverschiebung ist auch beeinflussbar, in welchen Bereichen des Zahnriemenrades eine stärkere Anlage an einem Kalibrierwerkzeug erfolgt, z.B. kann damit gesteuert werden, dass beim Kalibriervorgang die Zahnköpfe am Kalibrierwerkzeug anliegen und am Zahngrund keine Anlage erfolgt.

Eine günstige Variante besteht darin, dass die Korrekturverschiebung normal auf die Oberfläche des skalierten Pressformprofils durchgeführt wird, wodurch das tatsächliche Pressformprofil eine Äquidistante zum skalierten Pressformprofil bildet. Da moderne CAD-Systeme Funktionen für ein derartiges Versetzen eines Profils umfassen, ist eine Korrekturverschiebung in dieser Form konstruktiv einfach durchzuführen.

Bei einer veränderlichen Korrekturverschiebung kann insbesondere die Korrekturverschiebung an den Zahnflanken des Zahnriemenrades größer sein, als am Zahnkopf und/oder am Zahngrund. Während am Zahnkopf oder am Zahngrund die Durchmesserveränderung durch die Skalierung voll zum Tragen kommt, bewirkt die Steilheit an den Zahnflanken des Zahnriemenrades nur eine geringfügige Verschiebung des Pressformprofils gegenüber dem Sollprofil, weshalb es von Vorteil ist, in diesen Bereichen eine größere Korrekturverschiebung vorzusehen.

Die Korrekturverschiebung wird bei einem gesinterten Zahnriemenrad vorzugsweise aus einem Bereich mit einer unteren Grenze von 0,005 mm und einer oberen Grenze von 0,5 mm gewählt, wodurch sichergestellt ist, dass ein Einführen eines gesinterten Zahnriemenrades in ein Kalibrierwerkzeug ohne überhöhte Reibungskräfte durch Überdeckung oder Überschneidung der Profile erfolgen kann. Der Bereich der oberen Grenze kann beispielsweise bei größeren Raddurchmessern und größeren Unrundheiten zur Anwendung kommen, bei denen beim Sintern größere Maßänderungen zu erwarten sind.

Neben der Festlegung der Korrekturverschiebung in Form von absoluten Größen, kann diese auch aus einem Bereich mit einer unteren Grenze von 0,05 % und einer oberen Grenze von 1,0 % eines betrachteten Durchmessers gewählt werden, wodurch ein Zusammenhang der Korrekturverschiebung mit der Größe des Zahnriemenrades hergestellt wird.

Die Festlegung des Pressformprofils kann auch so erfolgen, dass der Skalierungsfaktor an einem bestimmten Außenumfang bzw. -durchmesser um den Wert der Korrekturverschiebung größer als bei einer Skalierung zu einem Standardpressformprofil ohne Korrekturverschiebung gewählt wird. Dadurch kann verhindert werden, dass durch die Kombination aus Skalierung und zusätzlicher Korrekturverschiebung ein zu großes Spiel zwischen dem gesinterten Zahnriemenrad und dem Kalibrierwerkzeug entsteht, da am Zahnkopf und am Zahngrund sowohl die Korrekturverschiebung, als auch die Skalierung im vollen Maße wirksam ist. Dies kann durch die Abschwächung der Skalierung um das Maß der nachträglichen Korrekturverschiebung verhindert werden.

Weiters kann die Korrekturverschiebung so durchgeführt werden, dass diese mit abnehmendem Winkel zwischen einer Tangente in einem Punkt des Pressformprofils und einem Radiusvektor von dem Punkt zu einem Mittelpunkt der Skalierung, der im Allgemeinen mit dem Drehachsenmittelpunkt zusammenfällt, zunimmt. Dies ist eine weitere Form einer über den Umfang ungleichförmigen Korrekturverschiebung, durch die radial ausgerichtete Abschnitte des Pressformprofils eine stärkere Korrekturverschiebung erfahren, während Abschnitte des Pressformprofils, die eher tangential zu einem Teilkreis des Zahnriemenrades verlaufen, eine geringere Korrekturverschiebung erfahren. So kann das Pressformprofil z.B. an der Zahnflanke, die mehr in Richtung der Zahnriemenradmitte weist, eine stärkere Korrekturverschiebung aufweisen, während am tangential ausgerichteten Zahnkopf nur eine geringe Korrekturverschiebung durchgeführt wird. Dabei kann z.B. ein linearer Zusammenhang zwischen dem Winkel und der Korrekturverschiebung hergestellt werden.

Die Erfindung wird weiters gelöst durch ein Verfahren zur Herstellung eines unrunden Zahnriemenrades aus Metallpulver, umfassend die Verfahrensschritte Verpressen von Metallpulver in einer Pressform zu einem Pressling, Sintern des Presslings, axiales Pressen des gesinterten Zahnriemenrades in einem Kalibrierwerkzeug, dadurch gekennzeichnet, dass die Pressform ein erfindungsgemäßes Pressformprofil nach einem der Ansprüche 1 bis 12 aufweist. Derartige unrunde Zahnriemenräder zeichnen sich durch eine gute Oberflächenqualität und Maßhaltigkeit auch an den Zahnflanken aus, da durch die erfindungsgemäße Korrekturverschiebung eine optimale Abstimmung zwischen Pressform und Kalibrierwerkzeug erfolgen kann.

Diese Abstimmung kann auch dadurch noch verbessert werden, dass ein Kalibrierprofil des Kalibrierwerkzeugs durch eine Skalierung und/oder eine Korrekturverschiebung aus dem Sollprofil des Zahnriemenrades festgelegt wird. Da das Zahnriemenrad nach dem Entformen aus dem Kalibrierwerkzeug das Sollprofil aufweisen soll, wird das Kalibrierprofil in den meisten Fällen durch eine einfache Skalierung festgelegt; durch die bei einem unrunden Zahnriemenrad jedoch schwerer vorhersagbaren Form- und Maßänderungen beim Sintervorgang kann durch eine gegebenenfalls durchgeführte Korrekturverschiebung die Sicherheit für das Vorhandensein eines Einführspiels zwischen gesintertem Zahnriemenrad und Kalibrierwerkzeug erhöht werden.

Die Erfindung wird im Nachfolgenden anhand der in den Zeichnungen dargestellten Ausführungsbeispiele näher erläutert.

Es zeigen in jeweils vereinfachter, schematischer Darstellung:
- Fig. 1: eine Ansicht eines unrunden Zahnriemenrades;
- Fig. 2: eine Detailansicht eines Zahnriemenrades gemäß Ausschnitt II in Fig. 1 zusammen mit den zugehörigen Profilen eines Presswerkzeugs und eines Kalibrierwerkzeugs;
- Fig. 3: eine Detailansicht des Zahnriemenrades im Bereich III gemäß Fig. 1 zusammen mit den Profilen eines Keilnabenprofils des Zahnriemenrades gemäß Fig. 1;
- Fig. 4: eine weitere Variante der Festlegung der Profile des Presswerkzeugs zur Herstellung eines Keilnabenprofils am Zahnriemenrad gemäß Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

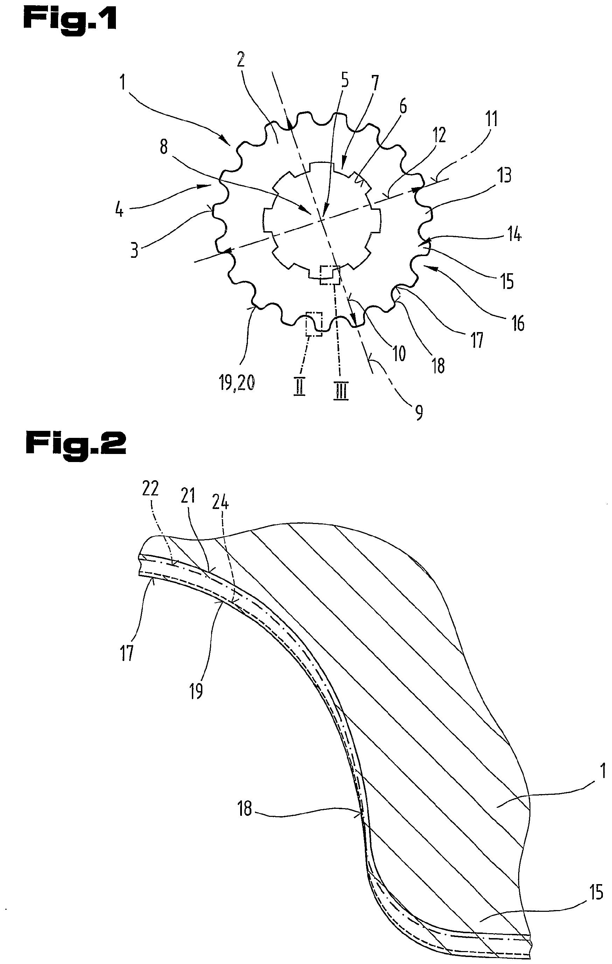

Fig. 1 zeigt ein unrundes, gesintertes Zahnriemenrad 1, das mit Hilfe des erfindungsgemäßen Verfahrens hergestellt ist. Das Zahnriemenrad 1 umfasst dabei einen Radkörper 2, der an einem Außenumfang 3 mit einer Verzahnung 4 versehen ist. Zur Befestigung des Zahnriemenrades 1 an einer Welle oder dgl. weist dieses eine Bohrung 5 auf, die an einem Innendurchmesser 6 ein Keilnabenprofil 7 aufweist. Die Mitte der Bohrung 5 bildet eine Drehachse 8 für das Zahnriemenrad 1.

Die Unrundheit des Zahnriemenrades 1 besteht im dargestellten Ausführungsbeispiel darin, dass dieses an einer durch die Drehachse 8 gehenden Hauptachse 9 einen Größtdurchmesser 10 besitzt, der größer ist, als ein an einer ebenfalls durch die Drehachse 8 gehenden Nebenachse 11 gemessener Kleinstdurchmesser 12. In Fig.1 sind die Durchmesser am Kopfkreis dargestellt, die Durchmesserunterschiede am Umfang des Zahnriemenrades können genauso anhand des Fußkreises oder des Teilkreises definiert sein.

Die Unrundheit des Zahnriemenrades 1 kann auch so aufgefasst werden, dass dieses an seinem Außenumfang 3 zumindest eine gegenüber einem Bezugskreis nach außen vorspringende Ausbuchtung und eine oder mehrere gegenüber einem Bezugskreis nach Innen rückspringende Einbuchtungen aufweist.

Die Verzahnung 4 am Außenumfang 3 des Zahnriemenrades 1 ist durch eine Vielzahl von radial nach außen ragenden Zähnen 13 gebildet. Diese sind mit einem Zahnfuß 14 mit dem Radkörper 2 verbunden und können mit einem Zahnkopf 15 in Zahnlücken eines Zahnriemens eingreifen. Der Abstand zwischen zwei nebeneinander liegenden Zähnen 13 bildet eine Zahnlücke 16, die durch einen Zahngrund 17 und einander zugewandte Zahnflanken 18 zweier benachbarter Zähne 13 begrenzt ist. Die Zahnlücken 16 sind dazu geeignet, Zähne eines mit dem Zahnriemenrad 1 zusammenwirkenden Zahnriemens teilweise aufzunehmen.

Das dargestellte Zahnriemenrad 1 ist oval bzw. elliptisch, kann jedoch auch, je nach Anwendungsfall, auch mehr als zwei Ausbuchtungen bzw. Einbuchtungen gegenüber einem Bezugskreis aufweisen.

Die Verzahnung 4 am Außenumfang 3 des Zahnriemenrades 1 besitzt ein durch die Konstruktion festgelegtes Sollprofil 19, von dem ein Istprofil 20 am fertigen Zahnriemenrad 1 möglichst wenig abweichen soll. Durch die bei einem Sintervorgang auftretenden möglichen Maßänderungen eines Sinterteils, sind dazu besondere Maßnahmen erforderlich. Die Zusammensetzung des Metallpulvers, aus dem ein Pressling hergestellt wird, sowie Prozessparameter, wie Temperatur und Druck beim Sintern, bestimmen im Wesentlichen das Verhalten eines Werkstücks während des Sintervorgangs. Dabei ist es möglich, dass der Pressling während des Sintervorgangs an Volumen zunimmt oder abnimmt oder auch keine Volumensänderung erfährt. Wenn dieses Verhalten aufgrund von Erfahrenswerten bekannt ist, kann das Istprofil 20 eines Zahnriemenrades 1 an das Sollprofil 19 angenähert werden, indem eine Pressform zur Herstellung eines Presslings gegenüber dem Sollprofil 19 in ihren Abmessungen so verändert wird, dass die Abweichung vom Sollprofil 19 durch die Dimensionsänderung beim Sintervorgang weitgehend aufgehoben wird. So wird beispielsweise zur Herstellung eines Presslings, der beim Sintervorgang an Volumen zunimmt, eine Pressform verwendet, die kleiner ist als das Sollprofil 19.

Diese Zusammenhänge sind in Fig. 2, die einen Ausschnitt II eines Zahnriemenrades 1 in Fig. 1 zeigt, dargestellt. Man erkennt dabei das Sollprofil 19 des Außenumfangs 3, das von einem Zahngrund 17 in eine Zahnflanke 18 übergeht und zu einem Zahnkopf 15 führt. Da wie im beschriebenen Ausführungsbeispiel angenommen, der Sinterteil während des Sintervorgangs gegenüber dem Pressling an Volumen zunimmt, muss die Pressform zur Herstellung eines Presslings kleiner sein, als das Sollprofil 19. Dies ist durch ein Pressformprofil 21 einer nicht weiter dargestellten Pressform gegeben, das relativ zum Sollprofil 19 in Richtung der Drehachse 8 verschoben ist. Diese Verschiebung des Pressformprofils 21 gegenüber dem Sollprofil 19 wird in der Sintertechnik allgemein als Skalierung bezeichnet und ist konstruktiv durch eine zentrische Streckung des Sollprofils 19 mit einem Streckzentrum in der Drehachse 8 realisiert. Eine derartige zentrische Streckung besitzt jedoch die Eigenschaft, dass ein Profillinienabschnitt, der radial verläuft, d.h. in Richtung der das Streckzentrum bildenden Drehachse 8 verläuft, in sich selbst übergeführt wird und daher in einem derartigen Abschnitt keine Verschiebung des Profils erfolgt.

Dies ist, wie in Fig. 2 erkennbar, annähernd im Bereich der Zahnflanke 18 der Fall, wie an einem durch eine strichpunktierte Linie dargestellten Standardpressformprofil 22 erkennbar ist. Dieses erhält man durch eine einfache zentrische Streckung des Sollprofils 19 mit dem Streckzentrum Drehachse 8 und einem Skalierungsfaktor, der einen Wert kleiner als 1 aufweist, beispielsweise 0,99 beträgt. Da das Sollprofil 19 im Bereich der Zahnflanke 18 ungefähr in Richtung der Drehachse 8 verläuft, bewirkt die einfache zentrische Streckung dort nur einen geringen Abstand zwischen dem Sollprofil 19 und dem Standardpressformprofil 22.

Durch die bei einem Sintervorgang auftretende Volumenzunahme würde das Istprofil im Bereich der Zahnflanke 18 gegenüber dem Sollprofil 19 nach außen vorragen und möglicherweise eine unzulässige Maß- bzw. Formabweichung bedeuten. Um ein Pressformprofil 21 zu schaffen, bei dem auch an den Zahnflanken 18 oder allgemein an ungefähr radial ausgerichteten Profilabschnitten eine gegebenenfalls auftretende Volumensänderung beim Sintervorgang vorweggenommen wird, wird die einfache Skalierung erfindungsgemäß um eine zusätzliche Korrekturverschiebung ergänzt. Diese Korrekturverschiebung ist im dargestellten Ausführungsbeispiel so ausgeführt, dass das Pressformprofil 21 eine Äquidistante zum Standardpressformprofil 22 bildet, d.h., dass das Pressformprofil 21 gegenüber dem Standardpressformprofil 22 um einen Verschiebeweg 23, der am gesamten Außenumfang 3 einen konstanten Betrag aufweist, normal auf das Standardpressformprofil 22 verschoben ist.

Diese Vermeidung eines Übermaßes des gesinterten Zahnriemenrades 1 ist insbesondere erforderlich, wenn dieses nach dem Sintervorgang noch durch einen Kalibriervorgang nachbehandelt wird. Zum Kalibrieren des gesinterten Zahnriemenrades 1 wird dieses axial in ein Kalibrierwerkzeug eingebracht, das ein Kalibrierprofil 24 aufweist, das geringfügig kleiner ist, als das Sollprofil 19, jedoch größer ist als das Istprofils des Zahnriemenrades 1 nach dem Sintervorgang. Beim Kalibrieren wird das Zahnriemenrad 1 axial gepresst, wodurch das Istprofil 20 radial nach außen gegen das Kalibrierprofil 24 gepresst wird. Das Kalibrierprofil 24 ist deshalb geringfügig kleiner als das Sollprofil 19, weil das Zahnriemenrad 1 nach dem Entformen aus dem Kalibrierwerkzeug durch einen elastischen Anteil der Verformung noch geringfügig an Volumen zunimmt, also größer wird. Das Kalibrierprofil 24 kann dabei durch eine zentrische Streckung aus dem Sollprofil 19 hervorgehen, oder als Äquidistante zu diesem ausgebildet sein, wobei die Verschiebung in der Praxis in einem Bereich von 0,002 und 0,5 mm liegt oder auch durch eine Kombination aus beiden gebildet sein.

Die Festlegung des Pressformprofils 21 mit einer zusätzlichen Korrekturverschiebung bewirkt, dass das gesinterte Zahnriemenrad 1 auch im Bereich der Zahnflanken 18 mit einem geringen Laufspiel in das Kalibrierwerkzeug eingeführt werden kann, was ohne die zusätzliche Korrekturverschiebung nicht möglich wäre, sondern ein starkes Reiben des Zahnriemenrades 1 mit dem Kalbrierwerkzeug im Bereich der Zahnflanken 18 bewirken würde.

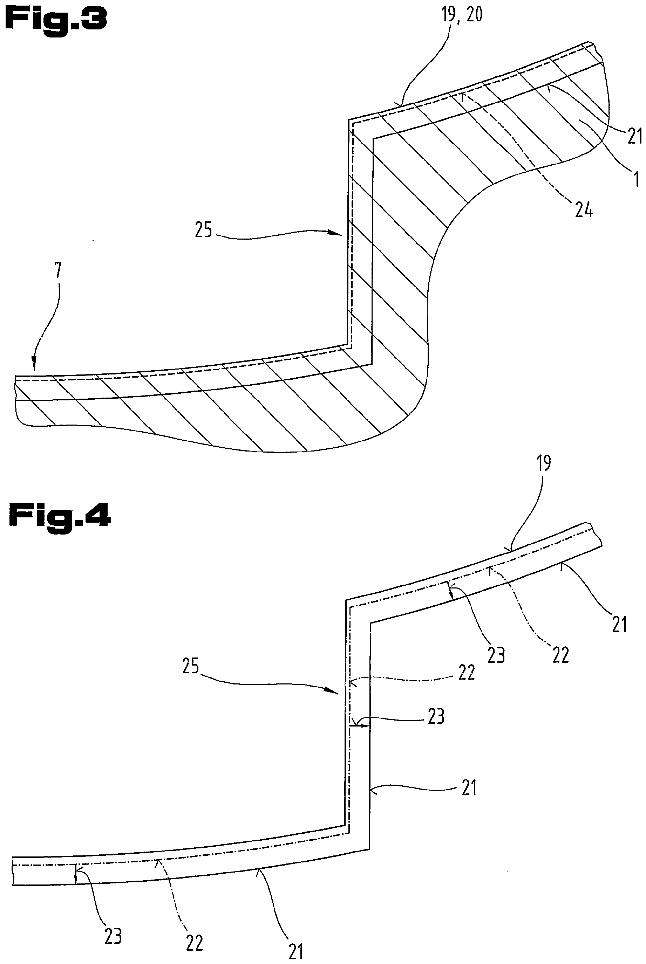

Fig. 3 zeigt einen Detailausschnitt III aus Fig. 1, an dem die Festlegung des Pressformprofils 21 an einem Innenumfang 6 eines Zahnriemenrades 1 dargestellt ist.

Bei dem in Fig. 3 beschriebenen Ausführungsbeispiel wird angenommen, dass das gesinterte Zahnriemenrad 1 gegenüber dem Pressling an Volumen und somit auch an den Abmessungen abnimmt, was wiederum durch die Zusammensetzung des Metallpulvers und die Prozessführung beim Sintervorgang vorgegeben ist. Da der Innendurchmesser des Keilnabenprofils 7 nicht kleiner sein soll, als das Sollprofil 19 und das Zahnriemenrad 1 während des Sintervorgangs kleiner wird, ist die Pressform zur Herstellung des Presslings größer zu dimensionieren, als das Sollprofil 19. Das zugehörige Pressformprofil 21 geht dabei wiederum durch eine Skalierung in Form einer zentrischen Streckung und einer anschließenden Korrekturverschiebung aus dem Sollprofil 19 hervor. Man erkennt, dass dadurch auch im Bereich einer Keilflanke 25 des Keilnabenprofils 7 ein deutlicher Abstand zwischen dem Sollprofil 19 und dem Pressformprofil 21 besteht. Zur Nachbearbeitung des gesinterten Zahnriemenrades 1 ist wiederum eine Kalibrierung möglich, wobei mit einer strichlierten Linie das Kalibrierprofil 24 dargestellt ist.

Fig. 4 zeigt im Detail noch einmal die Entstehung des Pressformprofils 21 aus dem Sollprofil 19 durch Verknüpfung einer Skalierung in Form einer zentrischen Streckung bezüglich der Drehachse 8 - dargestellt durch die strichpunktierte Linie des Standardpressformprofils 22 und eine anschließende Korrekturverschiebung, um den Verschiebeweg 23 in Richtung einer Verkleinerung des Zahnriemenrades 1.

Im dargestellten Ausführungsbeispiel ist die Verschiebung durch die Skalierung nur sehr gering, während die Vergrößerung des Standardpressformprofils 22 durch die Korrekturverschiebung zum Pressformprofil 21 den größeren Anteil am Unterschied zwischen dem Sollprofil 19 und dem Pressformprofil 21 ausmacht.

Unrunde Stahlzahnräder werden zur Übertragung ungleichförmiger Drehbewegungen genutzt, z.B. für Pressenantriebe, etc. Des Weiteren werden sie zur gezielten Tilgung von Drehungleichförmigkeiten im Massenausgleich genutzt (z.B. "Use of non circular gears for crankshaft Torque Balancing" IC Engines, VDI Berichte 1904, 2005).

Die Drehbewegung von Verbrennungsmotoren weist funktionsbedingt Drehungleichförmigkeiten auf. Diese Drehungleichförmigkeiten verursachen in Steuertrieben und in Antrieben von Nebenaggregaten zusätzliche Belastungen. Eine Möglichkeit zur Reduzierung dieser Torsionsschwingungen ist die Verwendung eines zusätzlichen Dämpfers oder Tilgers. Da es sich hier um ein zusätzliches Bauteil handelt, entstehen Gewichts- und Kostennachteile.

Besonders in Dieselmotoren kommen auch Stahlzahnräder in Steuertrieben oder zum Antrieb von Nebenaggregaten zum Einsatz. Diese Triebe zeichnen sich durch geringen Bauraum und hohe Leistungsdichte aus. Auch bei diesen Trieben können Momentenschwankungen und Drehungleichförmigkeiten durch eine unrunde Ausführung der Räder reduziert werden. Fertigungstechnisch können jedoch nur Stahlzahnräder mit exzentrischer Bohrung wirtschaftlich hergestellt werden.

Von Umschlingungstrieben ist bekannt, dass auch durch eine gezielt eingebrachte Unrundheit der Räder die Drehungleichförmigkeiten zu einem gewissen Teil kompensiert und somit die Belastung des gesamten Triebes reduziert werden können. Diese Räder können aufgrund der relativ geringen spezifischen Belastung pulvermetallurgisch hergestellt werden.

Im Vergleich zu Stahlzahnrädern weisen unrunde Zahnräder bzw. Verzahnungselemente aus Sinterwerkstoffen den Vorteil auf, dass diese durch die Formgebungsmöglichkeiten der Sintertechnik nahezu beliebigen Unrundheiten wirtschaftlicher, also kostengünstiger hergestellt werden können. Durch eine derartige Ausführung der Sinterzahnräder können vorhandene Drehschwingungen in gleichförmige Drehbewegungen umgewandelt werden bzw. vorhandene Drehmomentenschwankungen (z.B. in Hochdruckpumpen) durch ungleichförmigen Antrieb reduziert werden. Es kann damit auch die Belastungen im Rädertrieb verringert werden, sodass die Nutzungsdauer dieser Baugruppen erhöht werden kann.

Insbesondere lassen sich derartige unrunde Sinterzahnräder nach dem erfindungsgemäßen Verfahren herstellen.

Von Vorteil ist dabei weiters, dass die Festigkeiten von Sinterwerkstoffe durch den Einsatz von Verdichtungsverfahren entsprechend verbessert werden. Diese Festigkeits- bzw. Dichtesteigerung kann sich dabei auf den gesamten Bauteilquerschnitt oder auch nur auf den Verzahnungsbereich beziehen. Beispielsweise können zur Verdichtung Kalibrierverfahren oder Walzverfahren verwendet werden, bzw. können die fertigen Räder in Matrizen verdichtet werden, z.B. stufenweise mithilfe abgestufter, mehrstufiger Matrizen. Es lassen sich damit Dichten nahe der Vollmaterialdichte erzeugen, z.B. Dichten die um maximal 10 %, vorzugsweise maximal 5 %, insbesondere maximal 3 % von jener Dichte abweicht, die ein vergleichbarer, schmelzmetallurgisch hergestellter Bauteil aufweist. Diese Abweichung kann dabei auf die Oberfläche bzw. oberflächennahen Bereiche des Sinterzahnrades beschränkt sein, also das Sinterzahnrad eine geringere Kerndichte aufweisen. Es ist damit möglich, unrunde Sinterzahnräder auch in Antrieben zu verwenden, die anders als Umschlingungstriebe einer höheren mechanischen Belastung unterliegen.

Weiters können erfindungsgemäß verwendete Sinterzahnräder mit einer zentrischen Bohrung zur Aufnahme einer Wellennabe hergestellt werden, wodurch sich die Montage derartiger Antriebe vereinfachen lässt.

Für die Herstellung erfindungsgemäß verwendeter Sinterzahnräder können z.B. Stahlpulver, die gegebenenfalls vorlegiert sein können, eingesetzt werden, beispielsweise mittel- bis schwerverpressbare Eisen-Pulvermischungen mit Chrom in einem Anteil von bis zu 4 Gew.-% und mit insgesamt bis zu 10 Gew.-% metallischer Nichteisen-Legierungselemente, bis zu 5 Gew.-% Grafit, bis zu 3 Gew.-% Presshilfsmittel und bis zu 1 Gew.-% organischem Bindemittel. Diese Mischungen werden entweder als sog. Muttermischung in hochkonzentrierter Form evtl. auch unter Einsatz von Temperatur und Lösungsmitteln vorgemischt und anschließend mit Eisenpulver vermengt oder durch Zugabe der einzelnen Bestandteile direkt ins Eisenpulver vermischt.

Vorlegierungselemente können sein Cr, Mo, V, Si, Mn.

Hybridlegierungspulver können sein Cr-Mo vorlegiertes Fe-Pulver mit diffusionslegiertem Ni und/oder Cu, Mo vorlegiertes Fe-Pulver mit Ferro-Cr und Ferro-Mn auch wenn diese diffusionslegiert sind.

Es besteht weiters die Möglichkeit, diese Sinterzahnräder zu Härten bzw. anzulassen.

Es können aber auch andere, handelsübliche Sinterwerkstoffe verwendet werden.

Darüber hinaus haben Sinterzahnräder gegenüber Stahlzahnrädern den Vorteil, dass erstere bei vergleichbarer Geometrie ein besseres Akustik-Verhalten zeigen. Die Ursachen dafür liegen in der erhöhten Bauteildämpfung sowie in der gegebenenfalls reduzierten Zahnsteifigkeit.

Mögliche Anwendungen für derartige unrunde Sinterzahnräder sind in Sinterzahnradtrieben in Verbrennungsmotoren oder in einem Antriebsstrang, wie z.B. Koppeltriebe von Nockenwellen, Antriebe von Kraftstoffpumpen, Antriebe von Massenausgleichen, Antriebe von Steuertrieben, Antrieb von Nebenaggregaten (z.B. Lichtmaschine, Klimakompressor, Ölpumpe, Wasserpumpe, etc.), Motorabtrieb allgemein (Verbindung von Motor und Getriebe bei Motorrädern). Es handelt sich hierbei um Nichtumschlingungstriebe.

Die Ausführungsbeispiele zeigen mögliche Ausführungsvarianten des Verfahrens zur Herstellung eines Pressformprofils einer Pressform für ein unrundes gesintertes Zahnriemenrad, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend daraufhingewiesen, dass zum besseren Verständnis der Festlegung des Pressformprofils dieses bzw. dessen Bestandteile teilweise unmaßstäblich und/ oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Kettenrad
- 2: Radkörper
- 3: Außenumfang
- 4: Verzahnung
- 5: Bohrung

- 6: Innenumfang
- 7: Keilnabenprofil
- 8: Drehachse
- 9: Hauptachse
- 10: Größtdurchmesser

- 11: Nebenachse
- 12: Kleinstdurchmesser
- 13: Zahn
- 14: Zahnfuß
- 15: Zahnkopf

- 16: Zahnlücke
- 17: Zahngrund
- 18: Zahnflanke
- 19: Sollprofil
- 20: Istprofil

- 21: Pressformprofil
- 22: Standardpressformprofil
- 23: Verschiebewerg
- 24: Kalibrierprofil
- 25: Keilflanke

## Patentansprüche

1. Verfahren zur Herstellung eines Pressformprofils (21) einer Pressform für ein unrundes gesintertes Kettenrad oder Zahnriemenrad (1), das an einer durch eine Drehachse (8) gehenden Hauptachse (9) einen Größtdurchmesser (10) besitzt, der größer ist, als ein an einer ebenfalls durch die Drehachse (8) gehenden Nebenachse (11) gemessener Kleinstdurchmesser (12), wobei der Größtdurchmesser (10) und der Kleinstdurchmesser (12) am Kopfkreis oder anhand des Fußkreises oder des Teilkreises des Kettenrades oder Zahnriemenrades (1) definiert sind, und bei dem ein Pressformprofil (21) durch Skalierung eines Sollprofils (19) des Kettenrades oder Zahnriemenrades (1) mit einem Skalierungsfaktor festgelegt wird, **dadurch gekennzeichnet, dass** das Pressformprofil (21) zusätzlich zur Skalierung des Sollprofils (19) durch eine Korrekturverschiebung festgelegt wird.

2. Verfahren nach Anspruch 1, **dadurch gekennzeichnet, dass** die Korrekturverschiebung bei einem Außenumfang (3) des Kettenrades oder Zahnriemenrades (1) in Richtung kleinerer Außenabmessungen erfolgt.

3. Verfahren nach Anspruch 1, **dadurch gekennzeichnet, dass** die Korrekturverschiebung bei einem Innenumfang (6) des Kettenrades oder des Zahnriemenrades (1) in Richtung größerer Innenabmessungen erfolgt.

4. Verfahren nach einem der Ansprüche 1 bis 3, **dadurch gekennzeichnet, dass** die Korrekturverschiebung über den gesamten Umfang des Pressformprofils (21) um einen konstanten Betrag erfolgt.

5. Verfahren nach einem der Ansprüche 1 bis 3, **dadurch gekennzeichnet, dass** die Korrekturverschiebung über den Umfang des Pressformprofils (21) veränderlich ist.

6. Verfahren nach einem der Ansprüche 1 bis 5, **dadurch gekennzeichnet, dass** die Korrekturverschiebung normal auf die Oberfläche des skalierten Sollprofils (19) erfolgt.

7. Verfahren nach Anspruch 5 oder 6, **dadurch gekennzeichnet, dass** die Korrekturverschiebung an Zahnflanken (18) des Kettenrades oder des Zahnriemenrades (1) größer ist, als an einem Zahnkopf (15) und/oder an einem Zahngrund (17).

8. Verfahren nach einem der Ansprüche 1 bis 7, **dadurch gekennzeichnet, dass** die Korrekturverschiebung aus einem Bereich mit einer unteren Grenze von 0,001 mm und einer oberen Grenze von 0,5 mm gewählt wird.

9. Verfahren nach einem der Ansprüche 1 bis 8, **dadurch gekennzeichnet, dass** die Korrekturverschiebung aus einem Bereich mit einer unteren Grenze von 0,05 % und einer oberen Grenze von 1,0 % eines betrachteten Durchmessers gewählt wird.

10. Verfahren nach einem der Ansprüche 1 bis 9, **dadurch gekennzeichnet, dass** der Skalierungsfaktor um den Wert der Korrekturverschiebung größer oder kleiner als bei einer Skalierung für ein Standardpressformprofil (22) ohne Korrekturverschiebung gewählt wird.

11. Verfahren nach einem der Ansprüche 1 bis 10, **dadurch gekennzeichnet, dass** die Korrekturverschiebung mit abnehmendem Winkel zwischen einer Tangente in einem Punkt des Pressformprofils (21) und einem Radiusvektor von dem Punkt zu einem Mittelpunkt der Skalierung zunimmt.

12. Verfahren nach einem der Ansprüche 1 bis 11, **dadurch gekennzeichnet, dass** der Skalierungsfaktor über den Umfang des Kettenrades oder des Zahnriemenrades (1) veränderlich ist.

13. Verfahren zur Herstellung eines unrunden Kettenrades oder Zahnriemenrades (1), das an einer durch eine Drehachse (8) gehenden Hauptachse (9) einen Größtdurchmesser (10) besitzt, der größer ist, als ein an einer ebenfalls durch die Drehachse (8) gehenden Nebenachse (11) gemessener Kleinstdurchmesser (12), wobei der Größtdurchmesser (10) und der Kleinst-durchmesser (12) am Kopfkreis oder anhand des Fußkreises oder des Teilkreises des Ketten-rades oder Zahnriemenrades (1) definiert sind, aus Metallpulver umfassend die Verfahrensschritte Verpressen von Metallpulver in einer Pressform zu einem Pressling, Sintern des Presslings, axiales Pressen des gesinterten Kettenrades oder Zahnriemenrades in einem Kalibrierwerkzeug, **dadurch gekennzeichnet, dass** die Pressform ein Pressformprofil (21) nach einem der Ansprüche 1 bis 12 aufweist.

14. Verfahren nach Anspruch 13, **dadurch gekennzeichnet, dass** ein Kalibrierprofil (24) des Kalibrierwerkzeugs durch eine Skalierung und/oder eine Korrekturverschiebung aus dem Sollprofil (19) des Kettenrades oder Zahnriemenrades (1) festgelegt wird.

## Claims

1. A method of producing a compression mould profile (21) of a compression mould for a non-circular sintered chain wheel or cog belt wheel (1) which has a maximum diameter (10) at a major axis (9) passing through an axis of rotation (8) which is greater than a minimum diameter (12) measured at a minor axis (11) likewise passing through the axis of rotation (8), wherein the maximum diameter (10) and the minimum diameter (12) are defined at the crown circle or with the help of the root circle or the reference circle of the chain wheel or cog belt wheel (1) and wherein a compression mould profile (21) is set up by scaling a desired profile (19) of the chain wheel or cog belt wheel (1) with a scaling factor, **characterized in that** the compression mould profile (21) is set up by applying a corrective shift in addition to scaling the desired profile (19).

2. The method according to claim 1, **characterized in that** the corrective shift is applied with a view to obtaining smaller external dimensions in the case of an external circumference (3) of the chain wheel or cog belt wheel (1).

3. The method according to claim 1, **characterized in that** the corrective shift is applied with a view to obtaining bigger internal dimensions in the case of an internal circumference (6) of the chain wheel or cog belt wheel (1).

4. The method according to one of claims 1 to 3, **characterized in that** the corrective shift is applied around the entire circumference of the compression mould profile (21) by a constant amount.

5. The method according to one of claims 1 to 3, **characterized in that** the corrective shift may be varied around the circumference of the compression mould profile (21).

6. The method according to one of claims 1 to 5, **characterized in that** the corrective shift is applied normally with respect to the surface of the scaled desired profile (19).

7. The method according to claim 5 or 6, **characterized in that** the corrective shift at the tooth flanks (18) of the chain wheel or cog belt wheel (1) is bigger than at a tooth head (15) and/or at a tooth base (17).

8. The method according to one of claims 1 to 7, **characterized in that** the corrective shift is selected from a range with a lower limit of 0.001 mm and an upper limit of 0.5 mm.

9. The method according to one of claims 1 to 8, **characterized in that** the corrective shift is selected from a range with a lower limit of 0.05 % and an upper limit of 1.0 % of a given diameter.

10. The method according to one of claims 1 to 9, **characterized in that** the scaling factor is selected so that it is bigger or smaller by the value of the corrective shift than would be the case if scaling a standard compression mould profile (22) without applying a corrective shift.

11. The method according to one of claims 1 to 10, **characterized in that** the corrective shift increases as the angle between a tangent at a point of the compression mould profile (21) and a radius vector from this point to a centre point of the scaling decreases.

12. The method according to one of claims 1 to 11, **characterized in that** the scaling factor is variable around the circumference of the chain wheel or cog belt wheel (1).

13. A method of producing a non-circular chain wheel or cog belt wheel (1) which has a maximum diameter (10) at a major axis (9) passing through an axis of rotation (8) which is greater than a minimum diameter (12) measured at a minor axis (11) likewise passing through the axis of rotation (8), wherein the maximum diameter (10) and the minimum diameter (12) are defined at the crown circle or with the help of the root circle or the reference circle of the chain wheel or cog belt wheel (1), from powdered metal comprising the method steps of compressing powdered metal in a compression mould to obtain a compact, sintering the compact, axially compressing the sintered chain wheel or cog belt wheel in a calibrating mould, **characterized in that** the compression mould has a compression mould profile (21) according to one of claims 1 to 12.

14. The method according to claim 13, **characterized in that** a calibration profile (24) of the calibrating mould is set up on the basis of the desired profile (19) of the chain wheel or cog belt wheel (1) by scaling and/or a corrective shift.

## Revendications

1. Procédé de fabrication d'un profilé de moule de pressage (21) d'un moule de pressage pour un pignon ou une roue de courroie dentée (1) non ronde frittée, qui présente, au niveau d'un axe principal (9) traversant un axe de rotation (8), un diamètre maximum (10) qui est supérieur à un diamètre minimum (12) mesuré au niveau d'un axe secondaire (11) traversant également l'axe de rotation (8), le diamètre maximum (10) et le diamètre minimum (12) étant définis au niveau du cercle de tête ou à l'aide du cercle de pied ou du cercle partiel du pignon ou de la roue de courroie dentée (1), et dans lequel un profilé de moule de pressage (21) est défini par la mise à l'échelle d'un profilé de consigne (19) du pignon ou de la roue de courroie dentée (1) avec un facteur de mise à l'échelle, **caractérisé en ce que** le profilé de moule de pressage (21) est défini en outre pour la mise à l'échelle du profilé de consigne (19) par un déplacement de correction.

2. Procédé selon la revendication 1, **caractérisé en ce que** le déplacement de correction a lieu sur une circonférence extérieure (3) du pignon ou de la roue de courroie denté (1) en direction dimensions extérieures plus petites.

3. Procédé selon la revendication 1, **caractérisé en ce que** le déplacement de correction a lieu sur une circonférence intérieure (6) du pignon ou de la roue de courroie denté (1) en direction dimensions extérieures plus grandes.

4. Procédé selon l'une des revendications 1 à 3, **caractérisé en ce que** le déplacement de correction a lieu sur l'ensemble de la circonférence du profilé de moule de pressage (21) d'une valeur constante.

5. Procédé selon l'une des revendications 1 à 3, **caractérisé en ce que** le déplacement de correction est variable sur la circonférence du profilé de moule de pressage (21).

6. Procédé selon l'une des revendications 1 à 5, **caractérisé en ce que** le déplacement de correction a lieu de manière normale par rapport à la surface du profilé de consigne (19) mis à l'échelle.

7. Procédé selon la revendication 5 ou 6, **caractérisé en ce que** le déplacement de correction est supérieur, au niveau des flancs des dents (18) du pignon ou de la roue de courroie dentée (1), à celui au niveau d'un sommet de dent (15) et/ou au niveau d'une base de dent (17).

8. Procédé selon l'une des revendications 1 à 7, **caractérisé en ce que** le déplacement de correction est choisi dans une plage avec une limite inférieure de 0,001 mm et une limite supérieure de 0,5 mm.

9. Procédé selon l'une des revendications 1 à 8, **caractérisé en ce que** le déplacement de correction est choisi dans une plage avec une limite inférieure de 0,05 % et une limite supérieure de 1,0 % d'un diamètre considéré.

10. Procédé selon l'une des revendications 1 à 9, **caractérisé en ce que** le facteur de mise à l'échelle est choisi supérieur ou inférieur, de la valeur du déplacement de correction, à une mise à l'échelle pour un profilé de moule de pressage standard (22) sans déplacement de correction.

11. Procédé selon l'une des revendications 1 à 10, **caractérisé en ce que** le déplacement de correction augmente lorsque l'angle entre une tangente au niveau d'un point du profilé de moule de pressage (21) et un vecteur de rayon de ce point vers un centre de la mise à l'échelle diminue.

12. Procédé selon l'une des revendications 1 à 11, **caractérisé en ce que** le facteur de mise à l'échelle est variable sur la circonférence du pignon ou de la roue de courroie dentée (1).

13. Procédé de fabrication d'un pignon ou d'une roue de courroie dentée (1) non ronde, qui présente, au niveau d'un axe principal (9) traversant un axe de rotation (8), un diamètre maximum (10) qui est supérieur à un diamètre minimum (12) mesuré au niveau d'un axe secondaire (11) traversant également l'axe de rotation (8), le diamètre maximum (10) et le diamètre minimum (12) étant définis au niveau du cercle de tête ou à l'aide du cercle de pied ou du cercle partiel du pignon ou de la roue de courroie dentée (1), constitué de poudre métallique, comprenant les étapes de pressage de la poudre métallique dans un moule de pressage en une pastille, frittage de la pastille, pressage axiale du pignon ou de la roue de courroie dentée frittée dans un outil de calibrage, **caractérisé en ce que** le moule de pressage comprend un profilé de moule de pressage (21) selon l'une des revendications 1 à 12.

14. Procédé selon la revendication 13, **caractérisé en ce qu'**un profilé de calibrage (24) de l'outil de calibrage est défini par une mise à l'échelle et/ou un déplacement de correction à partir du profilé de consigne (19) du pignon ou de la roue de courroie dentée (1).
